(19) Europäisches Patentamt
European Patent Office
Office européen des brevets

(11) **EP 4 566 849 A1**

(12) **EUROPEAN PATENT APPLICATION**

(43) Date of publication:
**11.06.2025 Bulletin 2025/24**

(21) Application number: **24216015.8**

(22) Date of filing: **28.11.2024**

(51) International Patent Classification (IPC):
**B60C 23/04** (2006.01)

(52) Cooperative Patent Classification (CPC):
**B60C 23/0416; B60C 23/0488; B60C 23/0489**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.12.2023 US 202363606706 P**
**30.09.2024 US 202418901642**

(71) Applicant: **The Goodyear Tire & Rubber Company**
**Akron, OH 44316 (US)**

(72) Inventors:
• **SINGH, Kanwar Bharat**
**Copley, Ohio, 44321 (US)**
• **SHARMA, Sparsh**
**L-1610 Luxembourg (LU)**

(74) Representative: **Kutsch, Bernd**
**Goodyear S.A.**
**Patent Department**
**Avenue Gordon Smith**
**7750 Colmar-Berg (LU)**

(54) **AUTOMATED DETECTION OF TIRE SENSOR POSITIONS**

(57) Aspects of tire sensor auto-location are described. A sensor position detection device receives tire sensor values from a tire sensor device. The tire sensor values are measured or calculated for tire footprint length, longitudinal acceleration, and lateral acceleration. The sensor position detection device generates a longitudinal acceleration coefficient and a lateral acceleration coefficient using these values, and assigns the tire sensor device to a particular tire position of a vehicle based on a sign of the longitudinal acceleration coefficient and a sign of the lateral acceleration coefficient.

FIG. 1

EP 4 566 849 A1

**Description**

BACKGROUND

Tires include various conditions that are beneficial to monitor and estimate as the tires age. Such conditions include tire wear, tire pressure, and tire mismatch of dual tires. Tire wear plays an important role in vehicle factors such as safety, reliability, and performance. As the tire wears, the tread loses material and directly affects such vehicle factors. A tire can include a sensor or set of sensors that can detect parameters in association with the tire. As a result, it is desirable to identify tire sensor locations, for example, to associate a tire with a wheel or wheel position.

One approach to the identification of tire sensor position could manual identification of the location and data entry of this information for each tire and sensor. However, this can be time consuming and can also be subject to user error. Moreover, tires and wheels can be rotated or moved, requiring another manual assessment of tire location. As a result, there is a need in the art for a method that accurately and reliably identifies tire location.

SUMMARY OF THE INVENTION

The invention relates to a system in accordance with claim 1, to a method in accordance with claim 7 and to a non-transitory computer readable medium in accordance with claim 13.

Dependent claims refer to preferred embodiments of the invention.

BRIEF DESCRIPTION OF THE DRAWINGS

Aspects of the present disclosure can be better understood with reference to the following drawings. It is noted that the elements in the drawings are not necessarily drawn to scale, with emphasis instead being placed upon clearly illustrating the principles of the embodiments. In the drawings, like reference numerals designate like or corresponding, but not necessarily the same, elements throughout the several views.

FIG. 1 illustrates an example of a tire sensor position detection system, according to various aspects of the embodiments of the present disclosure.

FIG. 2 illustrate an example of a tire footprint length model, according to various aspects of the embodiments of the present disclosure.

FIGS. 3-6 illustrate graphs of aggregated data for tire footprint length varying with longitudinal acceleration and lateral acceleration, according to various aspects of the embodiments of the present disclosure. FIG. 7 illustrates an example of the operation of a tire sensor assignment component using an example of aggregated tire sensor data, according to various aspects of the embodiments of the present disclosure.

FIG. 8 illustrates components and functionalities performed by the tire sensor assignment component, according to various aspects of the embodiments of the present disclosure.

FIG. 9 illustrates a set of graphs that show footprint length model coefficients calculated using real-time recursive least squares fitting compared with least squares fitting using batch mode data, according to various aspects of the embodiments of the present disclosure.

FIG. 10 illustrates a computing device used for one or more of the components of the tire sensor position detection system, according to various aspects of the embodiments of the present disclosure.

DETAILED DESCRIPTION OF PREFERRED EMBODIMENTS

As outlined above, tire monitoring plays an important role in vehicle factors such as safety, reliability, and performance. A tire can include a sensor or set of sensors that can detect parameters in association with the tire. As a result, it is desirable to identify tire sensor locations, for example, to associate a tire with a wheel or wheel position. However, existing approaches can be time consuming and can also be subject to user error. As a result, there is a need in the art for a method that accurately and reliably identifies tire location.

The present disclosure describes mechanisms that use tire patch or footprint length to enable automatic location of tire sensors to their wheel positions, for example, on four-wheel position vehicles such as coupes, sedans, hatchbacks, vans, trucks, sport utility vehicles, and others. The present disclosure can further enable automatic location of tire sensors in real time using data collected during standard driving. In some cases, the footprint or (tire patch) length based model can further enable automatic location of tire sensor devices based at least in part on a relationship between footprint length and acceleration coefficient signs, for example, rather than identifying a specific turning direction and speed. The automatic location of tire sensor devices can refer to receiving the tire sensor data from a tire sensor device, processing the data, and assigning the tire sensor device to a tire position without user input or interactions. By contrast with systems that identify a specific turning direction, for example, with a vehicle-borne Global Positioning System) GPS device, and then filter data to a reduced set, the present mechanisms can operate using all data. The ability to use all data points, among other features, enables the present disclosure to identify a tire sensor location faster and further enables the use of data captured in natural driving scenarios, relative to other technologies. Tire locations can be accurately communicated to vehicle control systems. The coefficients that are evaluated for sign value can include a lateral acceleration coefficient for lateral acceleration and a longitudinal acceleration coefficient for a longitudinal acceleration, in a footprint length model as described herein.

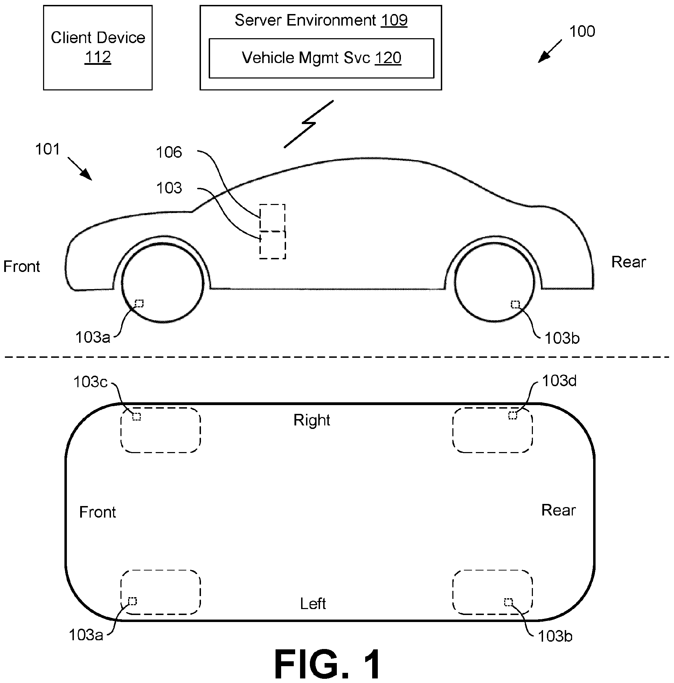

FIG. 1 shows a tire sensor position detection system 100. The tire sensor position detection system 100 can include a vehicle 101, tire sensor devices 103a-d (collectively, "the tire sensor devices 103," individually "a tire sensor device 103"), a sensor position detection device 106 such as a gateway or another device deployed to a vehicle 101, a server environment 109, and a client device 112. The tire sensor devices 103, the sensor position detection device 106, and the server environment 109 can communicate with one another through one or more networks. In some examples, the sensor position detection device 106 can include an edge device or networking device that can generate, facilitate, or maintain a network to which the tire sensor devices 103 connects.

The networks can include local area networks (LANs), wide area networks (WANs), and other networks. These networks can include wired or wireless components or a combination thereof. Wired networks can include Ethernet networks, cable networks, fiber optic networks, and telephone networks such as dial-up, digital subscriber line (DSL), and integrated services digital network (ISDN) networks. Wireless networks can include cellular networks, satellite networks, Institute of Electrical and Electronic Engineers (IEEE) 1002.11 wireless networks (i.e., WI-FI®), BLUETOOTH° networks, microwave transmission networks, as well as other networks relying on radio broadcasts. The networks can also include a combination of two or more networks. Examples of networks can include the Internet, intranets, extranets, virtual private networks (VPNs), and similar networks.

A vehicle 101 can include a coupe, sedan, hatchback, van, trucks, sport utility vehicle, and other types of vehicles. Generally, the vehicle 101 can include any vehicle with four wheels or tire positions including a front-left position, front-right position, a rear left position, and a rear right position.

A tire sensor device 103 can refer to a device that includes one or more sensors that respectively identify values corresponding to multiple different parameters. A tire sensor device 103 can include one or more sensors including motion sensors, environment sensors, and position sensors. For example, a tire sensor device 103 can include a Tire Pressure Monitoring System (TPMS) device that measures values for pressure, temperature, acceleration, and other types of parameters such as tire footprint length. A tire sensor device 103 can also include a computing device and a memory as well as network communications components. Generally, a tire sensor device 103 can communicate wirelessly with the edge or sensor position detection device 106. A tire sensor device 103 can generally be connected, integrated, or affixed to a tire (or wheel) of a vehicle 101. A tire sensor device 103 can be embedded in a tire, attached to a valve stem of the tire, or otherwise affixed to a tire or a corresponding wheel, in various examples. A tire sensor device 103 can also provide information to a user interface display or light of the vehicle 101 and/or a client device 112. The tire-specific information can include temperature, pressure, flat warnings, overfilled warnings, temperature warnings, tire miles, tire life remaining, and any other data. As a result, location of the tire sensor device 103 can enable the information to be displayed in association with a particular tire position.

In some examples, a tire can include multiple separate tire sensor devices 103, such as one tire sensor device 103 at least partially on an interior of the tire or tire cavity, which can have a set of sensors capable of measuring conditions within the tire; and a second tire sensor device 103 at least partially on an exterior of the tire, which can have a set of sensors capable of measuring conditions outside of the tire. This can be used for comparison of conditions or parameters between the interior and exterior of the tire. This can be particularly useful for comparison of environmental factors, such as temperature, external air pressure, internal tire pressure, light, humidity. However, force, vibration, or acceleration, and position sensor parameters, and any parameters of any type of parameters can be compared for validation of parameters and contrast of parameters.

The motion sensors can detect motion parameters such as acceleration forces and rotational forces along one or more axle. For example, a motion sensor can include an accelerometer or other force, vibration, or acceleration detection device. The tire sensor device 103 and/or the sensor position detection device 106 can calculate a footprint length for a tire based on the acceleration or force data for a tire, which has a uniquely identifiable waveform as the tire deforms near the sensor (which can be in a tire tread area or a sidewall near the tread area) as this portion of the tire makes contact with the driving surface, and again when the portion of the tire leaves contact with the driving surface. The vehicle speed or velocity can also be used in this calculation of footprint length in some examples. Vehicle velocity can be measured using GPS of the tire sensor device 103, the sensor position detection device 106, or the vehicle. Velocity can also be received from This can include a Controller Area Network (CAN) bus data based on speedometer readings or other information.

Environment sensors can detect environmental parameters such as temperature, external air pressure, internal tire pressure, light, humidity, and so on. For example, the environmental sensors can include barometers, photometers, and thermometers.

Position sensors can detect location and orientation parameters. These sensors can identify global or geographical location and orientation. The position sensors can include global positioning systems (GPS), magnetometers, and others.

The sensor position detection device 106 can include or access a sensor set that is separate from the tire sensor devices 103. This can include a CAN bus based sensor set of the vehicle 101, or another sensor device with one or more sensors corresponding to the vehicle 101 overall rather than a particular tire. The overall vehicle 101 sensor device can also include separate motion sensors, positions sensors, environment sensors, and so on.

Since the tire sensor devices 103 can be affixed to a tire of a vehicle 101, the various parameters detected can be tire-specific to the particular tire. These tire-specific values of the tire sensor devices 103 can differ from the general or overall state of the vehicle 101. As a result, sensors that are separate from the tire sensor devices 103 can be used when generalized vehicle information is desired.

The server environment 109 can include, for example, a hardware computing device or any other system providing computing capability. Alternatively, the server environment 109 can include one or more computing devices that are arranged, for example, in one or more server banks, computer banks, computing clusters, or other arrangements. The server environment 109 can include a grid computing resource or any other distributed computing arrangement. The computing devices can be located in a single installation or can be distributed among many different geographical locations. Various applications can be executed on the server environment 109. For example, a tire, wheel, and/or vehicle management service 120 can be executed by the server environment 109. Other applications, services, processes, systems, engines, or functionality not discussed in detail herein may also be executed or implemented by the server environment 109.

The server environment 109 can include or be operated as one or more virtualized computer instances. For purposes of convenience, the server environment 109 is referred to herein as singular. Even though the server environment 109 is referred to in the singular, it is understood that a plurality of server environments 109 can be employed in the various arrangements as described above. As the server environment 109 communicates with the sensor position detection device 106 and the tire sensor devices 103 directly or indirectly, the server environment 109 can be described as a remote server environment 109 or a cloud server environment 109.

The server environment 109 can include a data store. The data store can include memory of the server environment 109, mass storage resources of the server environment 109, or any other storage resources on which data can be stored by the server environment 109. The data store can include memory of various hosts in some examples. In some examples, the data store can include one or more relational databases, object-oriented databases, hierarchical databases, hash tables or similar key-value data stores, as well as other data storage applications or data structures. The data stored in the data store, for example, can be associated with the operation of the various services or functional entities described below.

The vehicle management service 120 can register and track tire sensor devices 103. A set of tire sensor devices 103 can be registered and pre-associated with a particular enterprise as well as one or more vehicles 101. Each of the vehicles 101 can be associated with a configuration that can be user-selected through an interface of the vehicle management service 120. The vehicle configuration can indicate information about the vehicle 101. The vehicle configuration can specify tire position parameters. The tire position parameters can also be considered wheel position parameters. Each tire position parameter can correspond to a tire position where a tire and one or more tire sensor devices 103 can be assigned, for example, using a unique identifier of the tire sensor device 103. Tire position parameters can include a front-left position parameter, front-right position parameter, a rear left position parameter, and a rear right position parameter. The value for each tire position parameter can include a unique identifier for a tire sensor device 103, indicating the specific tire sensor device 103 that is located at the associated tire position.

A client device 112 can include a processor-based system such as a computer system. Such a computer system can be embodied in the form of a personal computer (e.g., a desktop computer, a laptop computer, or similar device), a mobile computing device (e.g., personal digital assistants, cellular telephones, smartphones, web pads, tablet computer systems, music players, portable game consoles, electronic book readers, and similar devices), media playback devices (e.g., media streaming devices, BluRay® players, digital video disc (DVD) players, set-top boxes, and similar devices), a videogame console, or other devices with like capability. The client devices can include one or more displays, such as liquid crystal displays (LCDs), gas plasma-based flat panel displays, organic light emitting diode (OLED) displays, electrophoretic ink ("E-ink") displays, projectors, or other types of display devices.

The vehicle management service 120 can provide a user interface that manages and tracks various information about vehicles 101. The client device 112 can access this user interface over a private or public network such as the Internet. The vehicles 101 can be associated with particular enterprises such as companies and services, individual contractors or employees that operate and use the vehicles 101, and so on. A vehicle 101 can be registered in association with a particular enterprise. Administrators of the enterprise, as well as administrators of the vehicle management service 120 can log in and view user interfaces through which vehicles 101, and their associated components such as wheels, tires, and brakes can be managed. The vehicle management service 120 can also include a distributed application or set of applications that includes executables that are executed using the sensor position detection device 106. Any of the functionalities described for the vehicle management service 120 can be executed using the server environment 109 remote from the vehicle 101, a sensor position detection device 106 local to the vehicle 101, or both.

Tire sensor devices 103 deployed and associated with a particular vehicle may initially be unassociated with a tire position parameter. The sensor position detection device 106 can identify tire sensor positions and transmit them to the server environment 109. Alternatively, server environment 109 can receive sensor data from the vehicle 101 and the vehicle management service 120 can identify the tire sensor positions, store the results, and return the positions to the vehicle 101. The components of the tire sensor position detection system 100 can work in concert to identify positions for various tire sensor devices 103, and ultimately utilize the tire position parameters locally to the vehicle 101 as well as the server environment 109.

In the example shown, the sensor position detection device 106 can identify tire sensor device 103a and associate its unique sensor identifier with a front left tire position parameter. The sensor position detection device 106 can identify tire sensor device 103b and associate its unique sensor identifier with a rear left tire position parameter. The sensor position detection device 106 can identify tire sensor device 103c and associate its unique sensor identifier with a front right tire position parameter. The sensor position detection device 106 can identify tire sensor device 103d and associate its unique sensor identifier with a rear right tire position parameter.

In order to automatically associate a tire sensor device 103 with the appropriate tire position parameter, the sensor position detection device 106 can utilize lateral force data, longitudinal force data, and tire patch length or footprint length data that is detected and/or calculated using the tire sensor devices 103. In some examples, the tire patch length or footprint length data is calculated specific to each tire sensor device 103, while the lateral force (acceleration) data and longitudinal force data can be obtained for the vehicle 101 as a whole, using CAN bus sensors or sensors of the sensor position detection device 106.

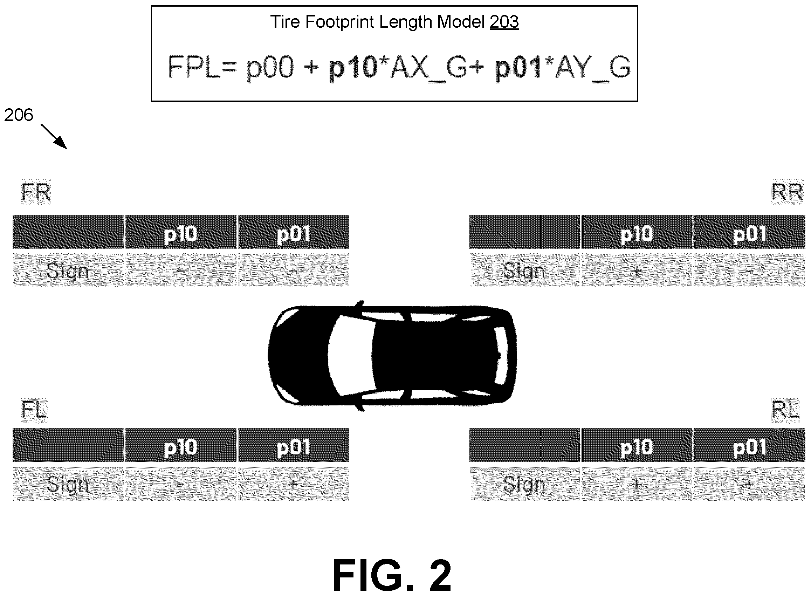

FIG. 2 shows a tire footprint length model 203 as well as tire-position-specific coefficient sign values 206 for longitudinal acceleration coefficient and lateral acceleration coefficient. The tire footprint length model 203 can be expressed using equation (1):

$$ FPL = p00 + p10 \times AX\_G + p01 \times AY\_G \qquad (1) $$

In equation (1), "FPL" can refer to footprint length or tire patch length for a particular tire. The term "p00" can refer to an intercept value that can represent FPL under cruising or nominal conditions where longitudinal acceleration "AX_G" and lateral acceleration "AY_G" are below a threshold value or zero. The term "p00" can refer to a coefficient parameter, since it can be a coefficient to be multiplied by a nominal value of one. The longitudinal acceleration coefficient term "p10" can refer to a slope value that indicates a sensitivity of footprint length to longitudinal acceleration "AX_G," where X can refer to a horizontal X axis along the direction of travel of the vehicle 101. In the example using the coefficient sign values 206, the longitudinal acceleration "AX_G," is positive when accelerating towards the front of the vehicle 101, and negative when decelerating or accelerating towards the rear of the vehicle 101.

The lateral acceleration coefficient term "p01" can refer to a slope value that indicates a sensitivity of footprint length to lateral acceleration "AY_G," where Y can refer to a horizontal Y axis perpendicular to travel of the vehicle 101, and the G can indicate measurement in multiples of gravitational force. Other measures of acceleration can also be used. Again, where the coefficient sign values 206 are used, the longitudinal acceleration "AY_G," is positive when accelerating (or turning) to the right of the direction of travel, and negative when accelerating (or turning) to the left.

The following example scenarios can describe why the sensor position detection device 106 can use the shown coefficient sign values 206 to identify tire position. In scenario 1, the vehicle is braking. In this situation, the longitudinal acceleration "AX_G," is negative (-). For front tires, the footprint length "FPL" will increase as the weight shifts to the front under braking. As a result, for front tires the longitudinal acceleration coefficient term "p10" will be negative, so that multiplication with the negative longitudinal acceleration causes FPL to increase according to the tire footprint length model 203. For rear tires, the footprint length "FPL" will decrease as the weight shifts off the rear under braking. Thus, for rear tires the longitudinal acceleration coefficient term "p10" will be positive, so that multiplication with the negative longitudinal acceleration causes FPL to decrease for rear tires according to the tire footprint length model 203.

In scenario 2, the vehicle is accelerating forward, so the longitudinal acceleration "AX_G," is positive (+). For front tires, the footprint length "FPL" will decrease as the weight shifts off of the front and onto the rear under forward acceleration. As a result, for front tires the longitudinal acceleration coefficient term "p10" will again be negative, so that multiplication with the positive longitudinal acceleration causes FPL to decrease according to the tire footprint length model 203. For rear tires, the footprint length "FPL" will increase as the weight shifts onto the rear under forward acceleration. Thus, for rear tires the longitudinal acceleration coefficient term "p10" will again be positive, so that multiplication with the positive longitudinal acceleration causes FPL to increase for rear tires according to the tire footprint length model 203. Scenarios 1 and 2 show that the longitudinal acceleration coefficient term "p10" will remain negative for front tires and positive for the rear, whether accelerating or decelerating. As a result, the sensor position detection device 106 can reliably use the acceleration-direction-agnostic tire footprint length model 203 to identify front and rear tire positions using everyday sensor data without filtering or categorizing the data for specific scenarios such as forward acceleration or deceleration.

In scenario 3, the vehicle is turning left. In this situation, the lateral acceleration "AY_G," is negative (-). For right side tires, the footprint length "FPL" will increase as the weight shifts to the right under the left turn. As a result, for right side tires the lateral acceleration coefficient term "p01" will be negative, so that multiplication with the negative lateral acceleration causes FPL to increase according to the tire footprint length model 203. For left side tires, the footprint length "FPL" will decrease as the weight shifts to the right. Thus, for left side tires the longitudinal acceleration coefficient term "p01" will be positive, so that multiplication with the negative longitudinal acceleration causes FPL to decrease for left side tires according to the tire footprint length model 203.

In scenario 4, the vehicle is turning right, so the lateral acceleration "AY_G," is positive (+). For right side tires, the footprint length "FPL" will decrease as the weight shifts to the left under the right turn. As a result, for right side tires the lateral acceleration coefficient term "p01" will again be negative, so that multiplication with the positive lateral acceleration causes FPL to decrease according to the tire footprint length model 203. For left side tires, the footprint length "FPL" will increase as the weight shifts to the left during the right turn. Thus, for left side tires the longitudinal acceleration coefficient term "p01" will again be positive, so that multiplication with the positive longitudinal acceleration causes FPL to increase for left side tires according to the tire footprint length model 203. Scenarios 3 and 4 show that the lateral acceleration coefficient term "p01" will remain negative for right side tires and positive for the left side, whether turning left or right. The tire footprint length model 203 can be acceleration- and turn-direction-agnostic. As a result, the sensor position detection device 106 can reliably use the tire footprint length model 203 to identify left and right side tire positions without filtering or categorizing the sensor data to specific scenarios such as left turns or right turns.

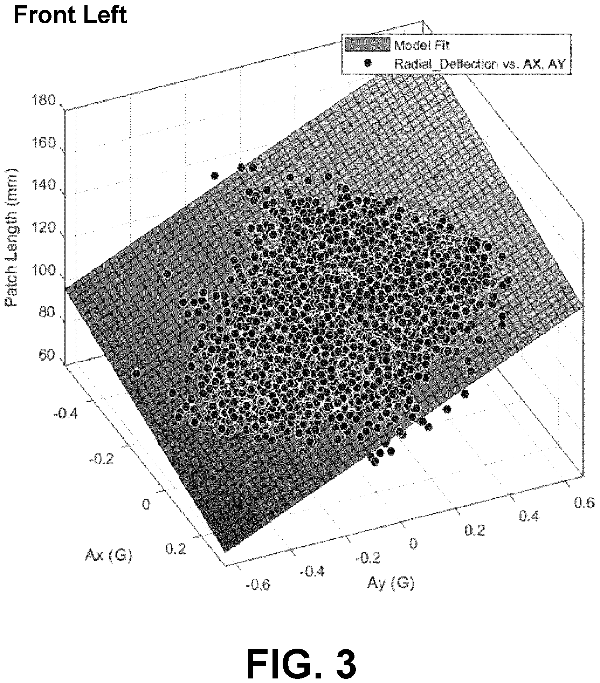

FIG. 3 shows a graph that provides one example of real-world timestamped sensor data aggregated over time from a tire sensor device 103 that is affixed to a front left tire of a vehicle 101. The timestamped sensor data can include acceleration magnitudes as well as patch length or footprint length calculated using this data.

The slope of patch length versus longitudinal acceleration "Ax(G)" is negative (-) or sloping downward such that footprint or patch length decreases as longitudinal acceleration increases. The longitudinal acceleration coefficient term "p10" represents this slope. The sensor position detection device 106 can identify that the acceleration coefficient term "p10" is negative, and can determine that the tire sensor device 103 that generated this data is a front tire. In some examples, the sensor position detection device 106 can tag or assign the tire sensor device 103 to indicate that it is a front tire separately from a left or right designation. However, in other examples, the sensor position detection device 106 can provisionally store this data until a specific location or position is identified.

The slope of patch length versus lateral acceleration "Ay(G)" is positive (+) or sloping upward such that footprint or patch length increases as lateral acceleration increases. The lateral acceleration coefficient term "p01" represents this slope. The sensor position detection device 106 can identify that the acceleration coefficient term "p01" is positive, and can determine that the tire sensor device 103 that generated this data is a left tire. In some examples, the sensor position detection device 106 can tag or assign the tire sensor device 103 to indicate that it is a left tire separately from a front or rear designation. However, in other examples, the sensor position detection device 106 can provisionally store this data until a specific location or position is identified. In this example, the aggregated acceleration data of the tire sensor device 103 (including the patch length data based at least in part on acceleration data) indicates that the tire sensor device 103 is a front left tire.

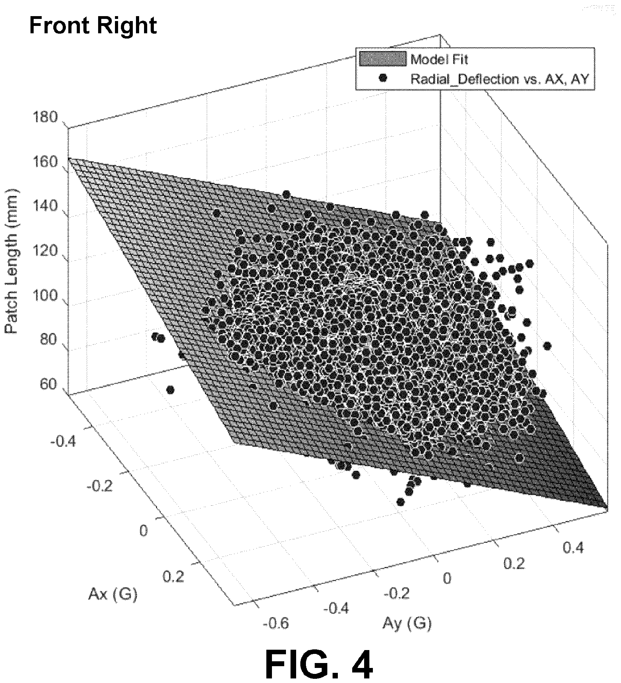

FIG. 4 shows a graph that provides one example of real-world timestamped sensor data aggregated over time from a tire sensor device 103 that is affixed to a front right tire of a vehicle 101. The timestamped sensor data can include acceleration magnitudes as well as patch length or footprint length calculated using this data.

The slope of patch length versus longitudinal acceleration "Ax(G)" is negative (-) or sloping downward such that footprint or patch length decreases as longitudinal acceleration increases. The longitudinal acceleration coefficient term "p10" represents this slope. The sensor position detection device 106 can identify that the acceleration coefficient term "p10" is negative, and can determine that the tire sensor device 103 that generated this data is a front tire. In some examples, the sensor position detection device 106 can tag or assign the tire sensor device 103 to indicate that it is a front tire separately from a left or right designation. However, in other examples, the sensor position detection device 106 can provisionally store this data until a specific location or position is identified.

The slope of patch length versus lateral acceleration "Ay(G)" is negative (-) or sloping downward such that footprint or patch length decreases as lateral acceleration increases in the positive direction (right). The lateral acceleration coefficient term "p01" represents this slope. The sensor position detection device 106 can identify that the acceleration coefficient term "p01" is negative, and can determine that the tire sensor device 103 that generated this data is a right side tire. In some examples, the sensor position detection device 106 can tag or assign the tire sensor device 103 to indicate that it is a right side tire separately from a front or rear designation. However, in other examples, the sensor position detection device 106 can provisionally store this data until a specific location or position is identified. In this example, the aggregated acceleration data of the tire sensor device 103 (including the patch length data based at least in part on acceleration data) indicates that the tire sensor device 103 is a front right tire.

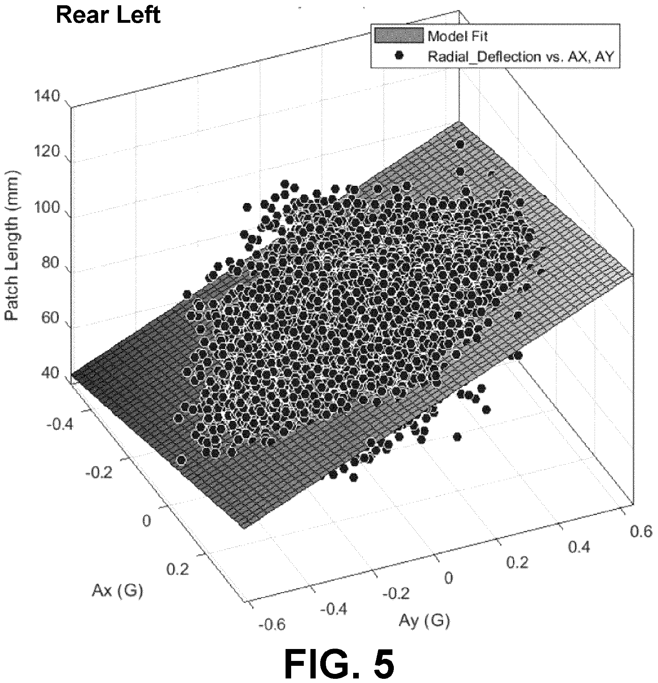

FIG. 5 shows a graph that provides one example of real-world timestamped sensor data aggregated over time from a tire sensor device 103 that is affixed to a rear left tire of a vehicle 101. The timestamped sensor data can include acceleration magnitudes as well as patch length or footprint length calculated using this data.

The slope of patch length versus longitudinal acceleration "Ax(G)" is positive (+) or sloping upward such that footprint or patch length increases as longitudinal acceleration increases. The longitudinal acceleration coefficient term "p10" represents this slope. The sensor position detection device 106 can identify that the acceleration coefficient term "p10" is positive, and can determine that the tire sensor device 103 that generated this data is a rear tire. In some examples, the sensor position detection device 106 can tag or assign the tire sensor device 103 to indicate that it is a rear tire separately from a left or right designation. However, in other examples, the sensor position detection device 106 can provisionally store this data until a specific location or position is identified.

The slope of patch length versus lateral acceleration "Ay(G)" is positive (+) or sloping upward such that footprint or patch length increases as lateral acceleration increases. The lateral acceleration coefficient term "p01" represents this slope. The sensor position detection device 106 can identify that the acceleration coefficient term "p01" is positive, and can determine that the tire sensor device 103 that generated this data is a left tire. In some examples, the sensor position detection device 106 can tag or assign the tire sensor device 103 to indicate that it is a left tire separately from a front or rear designation. However, in other examples, the sensor position detection device 106 can provisionally store this data until a specific location or position is identified. In this example, the aggregated acceleration data of the tire sensor device 103 (including the patch length data based at least in part on acceleration data) indicates that the tire sensor device 103 is a rear left tire.

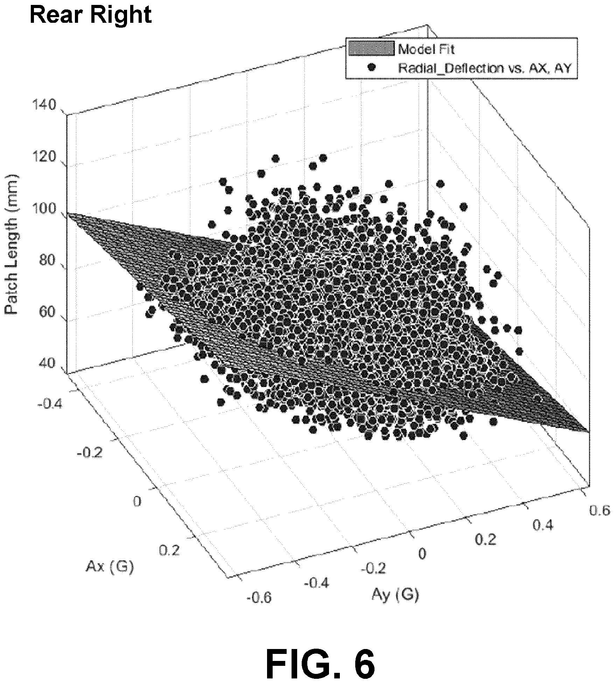

FIG. 6 shows a graph that provides one example of real-world timestamped sensor data aggregated over time from a tire sensor device 103 that is affixed to a rear right tire of a vehicle 101. The timestamped sensor data can include acceleration magnitudes as well as patch length or footprint length calculated using this data.

The slope of patch length versus longitudinal acceleration "Ax(G)" is positive (+) or sloping upward such that footprint or patch length increases as longitudinal acceleration increases. In this example the slope is not a steep slope, but is nevertheless positive. The longitudinal acceleration coefficient term "p10" represents this slope. The sensor position detection device 106 can identify that the acceleration coefficient term "p10" is positive, and can determine that the tire sensor device 103 that generated this data is a rear tire. In some examples, the sensor position detection device 106 can tag or assign the tire sensor device 103 to indicate that it is a rear tire separately from a left or right designation. However, in other examples, the sensor position detection device 106 can provisionally store this data until a specific location or position is identified.

The slope of patch length versus lateral acceleration "Ay(G)" is negative (-) or sloping downward such that footprint or patch length decreases as lateral acceleration increases in the positive direction (right). The lateral acceleration coefficient term "p01" represents this slope. The sensor position detection device 106 can identify that the acceleration coefficient term "p01" is negative, and can determine that the tire sensor device 103 that generated this data is a right side tire. In some examples, the sensor position detection device 106 can tag or assign the tire sensor device 103 to indicate that it is a right side tire separately from a front or rear designation. However, in other examples, the sensor position detection device 106 can provisionally store this data until a specific location or position is identified. In this example, the aggregated acceleration data of the tire sensor device 103 (including the patch length data based at least in part on acceleration data) indicates that the tire sensor device 103 is a front right tire.

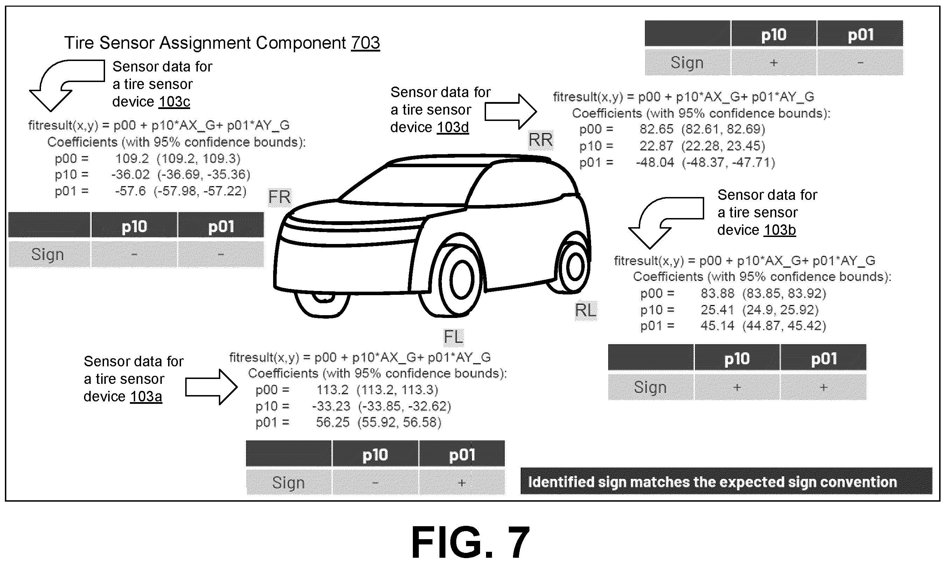

FIG. 7 shows one example of the operation of a tire sensor assignment component 703 of a sensor position detection device 106 using the aggregated tire sensor data from FIGS. 3-6. In this example, the data can correspond to a small sport utility vehicle. However, the tire sensor assignment component 703 can operate similarly for any four-wheeled vehicle 101 as discussed above.

The tire sensor assignment component 703 can receive timestamped sensor data including footprint length, longitudinal acceleration, and lateral acceleration to generate data points that indicate at least this information. This can enable three dimensions of information, enabling three-dimensional graphing as shown in FIGS. 3-6. However, the data can be processed without graphing. The tire sensor assignment component 703 can process the data separately for each tire sensor device 103. The tire sensor assignment component 703 can identify the coefficient values within a predetermined confidence value, which can be 95% in this example. Any predetermined confidence value can be used.

The tire sensor assignment component 703 can receive timestamped sensor data for a tire sensor device 103a to identify the nominal footprint length "p00," the longitudinal acceleration coefficient term "p10," and the lateral acceleration coefficient term "p01." The tire sensor assignment component 703 can use the longitudinal acceleration coefficient term "p10" and the lateral acceleration coefficient term "p01" to assign the sensor identifier for the tire sensor device 103a to a particular tire position. Since p10 is negative and p01 is positive, the tire sensor assignment component 703 can tag or assign the tire sensor device 103a to a front and left position.

The tire sensor assignment component 703 can receive timestamped sensor data for a tire sensor device 103b.

Since p10 is positive and p01 is positive, the tire sensor assignment component 703 can tag or assign the tire sensor device 103b to a rear and left position. The tire sensor assignment component 703 can receive timestamped sensor data for a tire sensor device 103c. Since p10 is negative and p01 is negative, the tire sensor assignment component 703 can tag or assign the tire sensor device 103c to a front and right position. The tire sensor assignment component 703 can receive timestamped sensor data for a tire sensor device 103d. Since p10 is positive and p01 is negative, the tire sensor assignment component 703 can tag or assign the tire sensor device 103d to a front and right position.

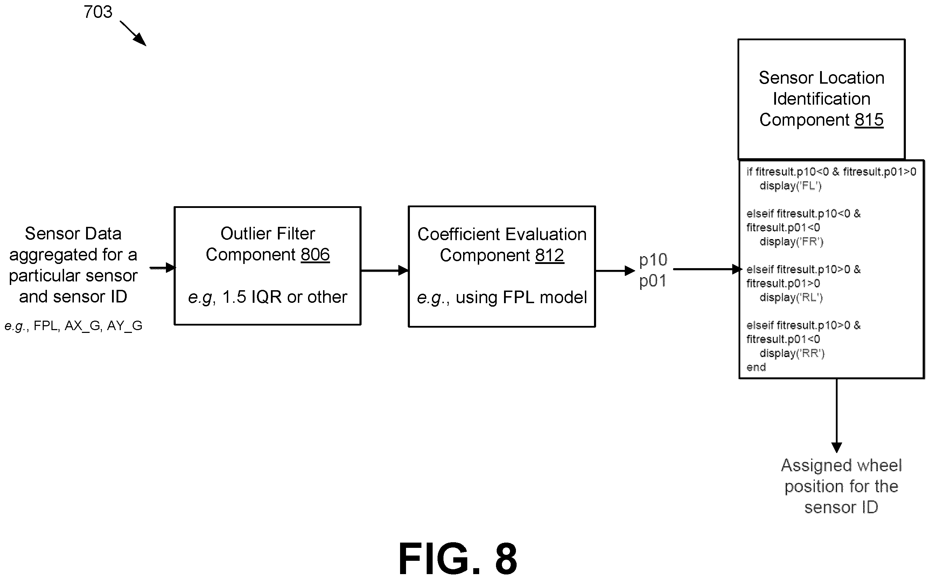

FIG. 8 shows additional details of the tire sensor assignment component 703. The tire sensor assignment component 703 can include an outlier filter component 806, a coefficient evaluation component 812, and a sensor location identification component 815. While the functionalities are described as performed by a particular subcomponent of the tire sensor assignment component 703, another component of the sensor position detection device 106, or a component of the server environment 109 can additionally or alternatively perform all or a portion of these functionalities. The various components can refer to logical code components, physical devices executing code, or flowchart blocks performed the tire sensor assignment component 703.

The outlier filter component 806 can receive sensor data and filter it to remove outliers. In some examples, the outlier filter component 806 can include an interquartile filter component. The interquartile filter component use a 1.5 interquartile value, or another value to filter outliers from data closer to the median or average. The sensor data can include data aggregated and tagged in association with a sensor identifier of a particular tire sensor device 103. The sensor data can include timestamped data that is measured by the tire sensor device 103 and other vehicle-borne sensors of the vehicle 101, such as those attached to the CAN bus. The sensor data can include longitudinal acceleration data for the tire (or vehicle 101), lateral acceleration data for the tire (or vehicle 101), and footprint length for the tire. The footprint length can in some examples be a measurement that is identified and provided by the tire sensor device 103 and without CAN bus or tire-agnostic data for the vehicle 101.

The coefficient evaluation component 812 can use the outlier-filtered data to identify tire-specific values for footprint length model parameters including nominal footprint length "p00," longitudinal acceleration coefficient "p10," and lateral acceleration coefficient term "p01." The coefficient evaluation component 812 can transmit or provide the longitudinal acceleration coefficient "p10" and lateral acceleration coefficient term "p01" to the sensor location identification component 815. The coefficient evaluation component 812 can include least squares fitting, recursive least squares fitting with a forgetting factor, or another type of fitting model. The forgetting factor can refer to a factor or weighting where older values in a history of values for the discussed parameters are weighted lesser than more recent values. The recursive least squares fitting can enable real-time embedded application of the system by a sensor position detection device 106 in a vehicular environment, rather than in a server environment or laboratory environment. The least squares fitting can be appropriate for large batch analysis, for example, at the server level.

The sensor location identification component 815 can use the longitudinal acceleration coefficient "p10" and lateral acceleration coefficient term "p01" to identify a tire position or location. The sensor location identification component 815 can use the longitudinal acceleration coefficient "p10" to identify whether the sensor data indicates that the tire sensor device 103 is a front tire or a rear tire. If the longitudinal acceleration coefficient "p10" is negative, then the sensor location identification component 815 can tag or assign the tire sensor device 103 as a front tire. If the longitudinal acceleration coefficient "p10" is positive, then the sensor location identification component 815 can tag or assign the tire sensor device 103 as a rear tire.

The sensor location identification component 815 can use the lateral acceleration coefficient "p01" to identify whether the sensor data indicates that the tire sensor device 103 is a left tire or a right tire. If the lateral acceleration coefficient "p01" is negative, then the sensor location identification component 815 can tag or assign the tire sensor device 103 as a right tire. If the lateral acceleration coefficient "p01" is positive, then the sensor location identification component 815 can tag or assign the tire sensor device 103 as a left tire. As a result, the sensor location identification component 815 can assign or tag the tire sensor device 103 in association with a front and left position, a front and right position, a rear and left position, or a rear and right position. The code or pseudocode provided in FIG. 8 provides one nonlimiting example of a process of the sensor location identification component 815.

The process can be repeated or performed in parallel or with partial concurrence to identify positions of all tire sensor device 103. In some cases such as dual-tire axles for large trucks, more than one tire sensor device 103 can be assigned to the same position. Inside vs outside can be determined using temperature readings where the hotter temperatures can correspond to the inside tires and lower temperatures can correspond to the outside tires, as compared between two tires with the same position assignment. All of the discussed data, including all of the received sensor data, intermediate data such as coefficients and model parameter values, as well as the position tags or indications can be stored locally to at least one device of the vehicle 101. The data can also be transmitted to the vehicle management service 120. Moving forward, the local and remotely stored sensor data for a particular tire sensor device 103 can be stored in association with both the vehicle identifier of a vehicle 101, an enterprise identifier of an enterprise that owns or operates the vehicle 101, and a tire position including front-vs-rear and left-vs right indicators.

The sensor position detection device 106 can also provide an updated position for a tire sensor device 103 dynamically, with or without a manual indication that the tire or tire sensor device 103 should be reassessed. However, the sensor position detection device 106 can receive a manual indication that the tire or tire sensor device 103 is to be reassessed or that the tire has been rotated, and can clear its aggregated data and start the process again.

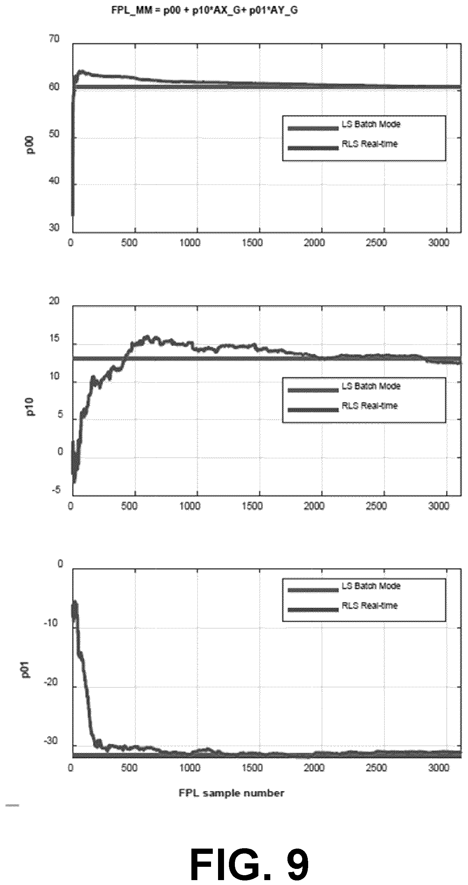

FIG. 9 shows a set of graphs that show footprint length model coefficients calculated using real-time recursive least squares fitting compared with least squares fitting using batch mode data. In each scenario, the least squares fitting batch mode calculation is the flat line, since it is identified as a single value with a batch of predetermined data. As can be seen, the real-time recursive least squares fitting converges on the least squares fitting batch mode value with after a number of samples are considered. However, in the context of the present mechanisms, the sign value of each coefficient is identified with a very small number of samples. In a real-time computing operation using processing by real-time recursive least squares fitting where data is received as it is detected by the sensor devices, the system can quickly identify tire position. In this context, the real-time receiving can indicate that data is received within milliseconds or centiseconds from being measured or calculated. Real-time computing operations such as real-time recursive least squares fitting actions can be considered real-time in an instance in which the processing is completed in milliseconds or centiseconds upon receipt.

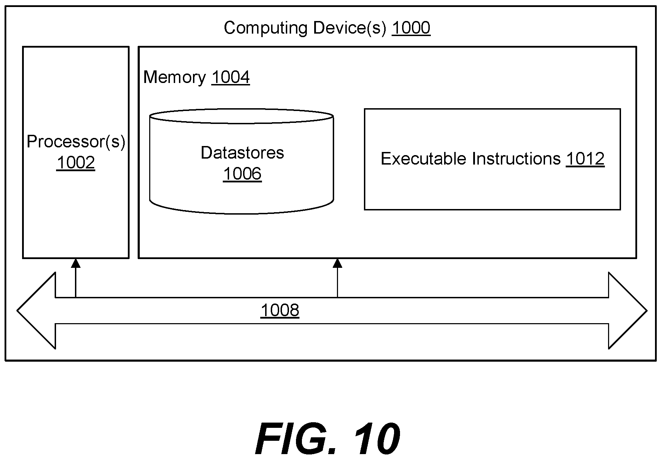

FIG. 10 illustrates an example computing device 1000 used for any of the computational devices of the tire sensor position detection system 100. This can include computing devices 1000 corresponding to a vehicle 101, a sensor position detection device 106, the server environment 109, and user devices that access the vehicle management service 120. The computing device 1000 includes at least one processing system, for example, having a processor 1002 and a memory 1004, both of which are electrically and communicatively coupled to a local interface 1008. The local interface 1008 can be embodied as a data bus with an accompanying address/control bus or other addressing, control, and/or command lines, for data communications and addressing between the processor 1002, the memory 1004, and the executable instructions 1012. Executable instructions 1012 of a computing device 800 can include a vehicle management service 120, a tire position classification process, a rule and or threshold based tire position classification process, and so on.

In various embodiments, the memory 1004 stores data 1006 in datastores and other software or executable-code components executable by the processor 1002. The datastores 1006 can include data related to the operation of the tire sensor position detection system 100, and other data. Among others, the executable-code components of various computing devices 800 can include components associated with any of the functions described for the tire sensor position detection system 100, and an operating system for execution by the processor 1002. Where any component discussed herein is implemented in the form of software, any one of a number of programming languages can be employed such as, for example, C, C++, C#, Objective C, JAVA®, JAVASCRIPT®, Perl, PHP, VISUAL BASIC®, PYTHON°, RUBY, FLASH°, or other programming languages.

The memory 1004 stores software for execution by the processor 1002. In this respect, the terms "executable" or "for execution" refer to software forms that can ultimately be run or executed by the processor 1002, whether in source, object, machine, or other form. Examples of executable programs include, for example, a compiled program that can be translated into a machine code format and loaded into a random access portion of the memory 1004 and executed by the processor 1002, source code that can be expressed in an object code format and loaded into a random access portion of the memory 1004 and executed by the processor 1002, or source code that can be interpreted by another executable program to generate instructions in a random access portion of the memory 1004 and executed by the processor 1002, etc.

In various embodiments, the memory 1004 can include both volatile and nonvolatile memory and data storage components. Volatile components are those that do not retain data values upon loss of power. Nonvolatile components are those that retain data upon a loss of power. Thus, the memory 1004 can include, a random access memory (RAM), read-only memory (ROM), magnetic or other hard disk drive, solid-state, semiconductor, universal serial bus (USB) flash drive, memory card, optical disc (e.g., compact disc (CD) or digital versatile disc (DVD)), floppy disk, magnetic tape, or any combination thereof. In addition, the RAM can include, for example, a static random access memory (SRAM), dynamic random access memory (DRAM), or magnetic random access memory (MRAM), and/or other similar memory device. The ROM can include, for example, a programmable read-only memory (PROM), erasable programmable read-only memory (EPROM), electrically erasable programmable read-only memory (EEPROM), or other similar memory device. An executable program can be stored in any portion or component of the memory 1004.

The processor 1002 can be embodied as one or more microprocessors, one or more discrete logic circuits having logic gates for implementing various logic functions, application specific integrated circuits (ASICs) having appropriate logic gates, and/or programmable logic devices (e.g., field-programmable gate array (FPGAs), and complex programmable logic devices (CPLDs)).

If embodied in software, the executable instructions 1012 can represent one or more module or group of code that includes program instructions to implement the specified logical function(s) discussed herein. The program instructions can be embodied in the form of source code that includes human-readable statements written in a programming language or machine code that includes machine instructions recognizable by a suitable execution system, such as a processor in a computer system or other system. Thus, the processor 1002 can be directed by execution of the program instructions to perform certain processes, such as those illustrated in the flowcharts described herein. In the context of the present disclosure, a non-transitory computer-readable medium can be any tangible medium that can contain, store, or maintain any logic, application, software, or executable-code component described herein for use by or in connection with an instruction execution system.

Also, one or more of the components described herein that include software or program instructions can be embodied in a non-transitory computer-readable medium for use by or in connection with an instruction execution system, such as the processor 1002. The computer-readable medium can contain, store, and/or maintain the software or program instructions for execution by or in connection with the instruction execution system. The computer-readable medium can include a physical media, such as, magnetic, optical, semiconductor, and/or other suitable media or drives. Further, any logic or component described herein can be implemented and structured in a variety of ways. For example, one or more components described can be implemented as modules or components of a single application. Further, one or more components described herein can be executed in one computing device or by using multiple computing devices.

The flowcharts or process diagrams can be representative of certain methods or processes, functionalities, and operations of the embodiments discussed herein. Each block can represent one or a combination of steps or executions in a process. Alternatively or additionally, each block can represent a module, segment, or portion of code that includes program instructions to implement the specified logical function(s). The program instructions can be embodied in the form of source code that includes human-readable statements written in a programming language or machine code that includes numerical instructions recognizable by a suitable execution system such as the processor 1002. The machine code can be converted from the source code, etc. Further, each block can represent, or be connected with, a circuit or a number of interconnected circuits to implement a certain logical function or process step.

Although the flowcharts illustrate a specific order, it is understood that the order can differ from that which is depicted. For example, an order of execution of two or more blocks can be scrambled relative to the order shown. Also, two or more blocks shown in succession can be executed concurrently or with partial concurrence. Further, in some embodiments, one or more of the blocks can be skipped or omitted. In addition, any number of counters, state variables, warning semaphores, or messages might be added to the logical flow described herein, for purposes of enhanced utility, accounting, performance measurement, or providing troubleshooting aids, etc. Such variations, as understood for implementing the process consistent with the concepts described herein, are within the scope of the embodiments.

**Claims**

1. A system comprising at least one computing device comprising at least one processor and at least one memory comprising instructions, when executed, cause the at least one computing device to at least:

   receive, by a sensor position detection device, a plurality of tire sensor values from a tire sensor device, wherein the plurality of tire sensor values are measured or calculated for a respective one of: a tire footprint length parameter, a longitudinal acceleration parameter, and lateral acceleration parameter;
   process, by the sensor position detection device, the plurality of tire sensor values for the tire footprint length parameter, the longitudinal acceleration parameter, and the lateral acceleration parameter, wherein the sensor position detection device generates at least a longitudinal acceleration coefficient and a lateral acceleration coefficient; and
   assign, by the sensor position detection device, the tire sensor device to a particular tire position in relation to a vehicle based at least in part on a sign of the longitudinal acceleration coefficient and a sign of the lateral acceleration coefficient.

2. The system of claim 1, wherein the instructions, when executed, cause the at least one computing device to at least: identify a tire footprint length model that defines a relationship between at least: a tire footprint length, a nominal footprint length, the longitudinal acceleration coefficient, the longitudinal acceleration, the lateral acceleration coefficient, and the lateral acceleration.

3. The system of claim 1 or 2, wherein the tire sensor values are processed in real-time by the sensor position detection device; and/or wherein the sensor position detection device processes the tire sensor values in real-time based at least in part on a recursive least squares fitting process.

4. The system of at least one of the previous claims, wherein the tire sensor device is assigned to a tire position based at least in part on storing a unique tire sensor device identifier of the tire sensor device in association with data indicating the tire position.

5. The system of at least one of the previous claims, wherein the sensor position detection device is configured to process the plurality of tire sensor values to further identify a nominal tire footprint length.

6. The system of at least one of the previous claims, wherein the instructions, when executed, cause the at least one computing device to at least: transmit the particular tire position to at least one of a server environment, a client device, or any combination thereof.

7. A method comprising:

receiving, by a sensor position detection device, a plurality of tire sensor values from a tire sensor device, wherein the plurality of tire sensor values are measured or calculated for a respective one of: a tire footprint length parameter, a longitudinal acceleration parameter, and lateral acceleration parameter;
processing, by the sensor position detection device, the plurality of tire sensor values for the tire footprint length parameter, the longitudinal acceleration parameter, and the lateral acceleration parameter, wherein the sensor position detection device generates at least a longitudinal acceleration coefficient and a lateral acceleration coefficient; and
assigning, by the sensor position detection device, the tire sensor device to a particular tire position in relation to a vehicle based at least in part on a sign of the longitudinal acceleration coefficient and a sign of the lateral acceleration coefficient.

8. The method of claim 7, further comprising:
identifying a tire footprint length model that defines a relationship between at least: a tire footprint length, a nominal footprint length, the longitudinal acceleration coefficient, the longitudinal acceleration, the lateral acceleration coefficient, and the lateral acceleration.

9. The method of claim 7 or 8, wherein the tire sensor values are processed in real-time by the sensor position detection device; and/or wherein the sensor position detection device processes the tire sensor values in real-time based at least in part on a recursive least squares fitting process.

10. The method of at least one of the claims 7 to 9, wherein the tire sensor device is assigned to a tire position based at least in part on storing a unique tire sensor device identifier of the tire sensor device in association with data indicating the tire position.

11. The method of at least one of the claims 7 to 10, wherein the sensor position detection device processes the plurality of tire sensor values to further identify a nominal tire footprint length.

12. The method of at least one of the claims 7 to 11, further comprising: transmitting the particular tire position to at least one of a server environment, a client device, or any combination thereof.

13. A non-transitory computer readable medium comprising instructions executable by at least one computing device, the instructions, when executed by the at least one computing device, causing the at least one computing device to at least:

receive, by a sensor position detection device, a plurality of tire sensor values from a tire sensor device, wherein the plurality of tire sensor values are measured or calculated for a respective one of: a tire footprint length parameter, a longitudinal acceleration parameter, and lateral acceleration parameter;
process, by the sensor position detection device, the plurality of tire sensor values for the tire footprint length parameter, the longitudinal acceleration parameter, and the lateral acceleration parameter, wherein the sensor position detection device generates at least a longitudinal acceleration coefficient and a lateral acceleration coefficient; and
assign, by the sensor position detection device, the tire sensor device to a particular tire position in relation to a vehicle based at least in part on a sign of the longitudinal acceleration coefficient and a sign of the lateral acceleration coefficient.

14. The non-transitory computer readable medium of claim 13, wherein the instructions, when executed, cause the at least one computing device to at least: identify a tire footprint length model that defines a relationship between at least: a tire footprint length, a nominal footprint length, the longitudinal acceleration coefficient, the longitudinal acceleration, the lateral acceleration coefficient, and the lateral acceleration.

**15.** The non-transitory computer readable medium of claim 13 or 14, wherein the tire sensor device is assigned to a tire position based at least in part on storing a unique tire sensor device identifier of the tire sensor device in association with data indicating the tire position; and/or wherein the sensor position detection device processes the plurality of tire sensor values to further identify a nominal tire footprint length.

FIG. 1

EP 4 566 849 A1

EP 4 566 849 A1

Tire Footprint Length Model 203

$$FPL = p00 + \mathbf{p10}^*AX\_G + \mathbf{p01}^*AY\_G$$

206

FR

|  | p10 | p01 |
|---|---|---|
| Sign | – | – |

RR

|  | p10 | p01 |
|---|---|---|
| Sign | + | – |

FL

|  | p10 | p01 |
|---|---|---|
| Sign | – | + |

RL

|  | p10 | p01 |
|---|---|---|
| Sign | + | + |

**FIG. 2**

**Front Left**

**FIG. 3**

FIG. 4

FIG. 5

**FIG. 6**

EP 4 566 849 A1

Tire Sensor Assignment Component 703

Sensor data for a tire sensor device 103c

fitresult(x,y) = p00 + p10*AX_G+ p01*AY_G
Coefficients (with 95% confidence bounds):
p00 = 109.2 (109.2, 109.3)
p10 = -36.02 (-36.69, -35.36)
p01 = -57.6 (-57.98, -57.22)

| FR | p10 | p01 |
|---|---|---|
| Sign | − | − |

Sensor data for a tire sensor device 103d

RR

fitresult(x,y) = p00 + p10*AX_G+ p01*AY_G
Coefficients (with 95% confidence bounds):
p00 = 82.65 (82.61, 82.69)
p10 = 22.87 (22.28, 23.45)
p01 = -48.04 (-48.37, -47.71)

| | p10 | p01 |
|---|---|---|
| Sign | + | − |

Sensor data for a tire sensor device 103b

fitresult(x,y) = p00 + p10*AX_G+ p01*AY_G
Coefficients (with 95% confidence bounds):
p00 = 83.88 (83.85, 83.92)
p10 = 25.41 (24.9, 25.92)
p01 = 45.14 (44.87, 45.42)

| | p10 | p01 |
|---|---|---|
| Sign | + | + |

Sensor data for a tire sensor device 103a

FR

RL

FL

fitresult(x,y) = p00 + p10*AX_G+ p01*AY_G
Coefficients (with 95% confidence bounds):
p00 = 113.2 (113.2, 113.3)
p10 = -33.23 (-33.85, -32.62)
p01 = 56.25 (55.92, 56.58)

| | p10 | p01 |
|---|---|---|
| Sign | − | + |

Identified sign matches the expected sign convention

# FIG. 7

Sensor Data
aggregated for a
particular sensor
and sensor ID

*e.g.*, FPL, AX_G, AY_G

Outlier Filter
Component 806

*e.g*, 1.5 IQR or other

Coefficient Evaluation
Component 812

*e.g.*, using FPL model

p10
p01

Sensor Location
Identification
Component 815

```
if fitresult.p10<0 & fitresult.p01>0
    display('FL')

elseif fitresult.p10<0 &
fitresult.p01<0
    display('FR')

elseif fitresult.p10>0 &
fitresult.p01>0
    display('RL')

elseif fitresult.p10>0 &
fitresult.p01<0
    display('RR')
end
```

Assigned wheel
position for the
sensor ID

# FIG. 8

EP 4 566 849 A1

FPL_MM = p00 + p10*AX_G+ p01*AY_G

FIG. 9

Computing Device(s) 1000

Processor(s)
1002

Memory 1004

Datastores
1006

Executable Instructions 1012

1008

**FIG. 10**

EP 4 566 849 A1

Europäisches
Patentamt

European
Patent Office

Office européen
des brevets

# EUROPEAN SEARCH REPORT

**Application Number**

EP 24 21 6015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 029 707 A1 (GOODYEAR TIRE & RUBBER [US]) 20 July 2022 (2022-07-20) * paragraph [0025] - paragraph [0064]; figure 3A * | 1-15 | INV. B60C23/04 |
| A | US 8 798 850 B2 (FINK ALEXANDER [DE]; HAAS THOMAS [DE] ET AL.) 5 August 2014 (2014-08-05) * column 5 - column 7; figures 1A-4 * | 1-15 | |
| A | EP 3 495 170 A1 (AUTEL INTELLIGENT TECH CORP LTD [CN]) 12 June 2019 (2019-06-12) * paragraph [0018] - paragraph [0056]; figures 1-10 * | 1-15 | |
| A | KR 2017 0107366 A (SEO SUNG WON [KR]) 25 September 2017 (2017-09-25) * the whole document * | 1-15 | |
| A | KR 2012 0121697 A (-) 6 November 2012 (2012-11-06) * the whole document * | 1-15 | **TECHNICAL FIELDS SEARCHED (IPC)** B60C |

The present search report has been drawn up for all claims

| Place of search | Date of completion of the search | Examiner |
|---|---|---|
| Munich | 7 March 2025 | Billen, Karl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 6015

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2025

| Patent document cited in search report | | Publication date | Patent family member(s) | | Publication date |
|---|---|---|---|---|---|
| EP 4029707 | A1 | 20-07-2022 | BR | 102022000219 A2 | 28-03-2023 |
| | | | CN | 114801601 A | 29-07-2022 |
| | | | EP | 4029707 A1 | 20-07-2022 |
| | | | US | 2022230481 A1 | 21-07-2022 |
| US 8798850 | B2 | 05-08-2014 | DE | 102008046271 B3 | 08-04-2010 |
| | | | US | 2010063669 A1 | 11-03-2010 |
| EP 3495170 | A1 | 12-06-2019 | CN | 106457936 A | 22-02-2017 |
| | | | EP | 3495170 A1 | 12-06-2019 |
| | | | US | 2019152278 A1 | 23-05-2019 |
| | | | WO | 2018023699 A1 | 08-02-2018 |
| KR 20170107366 | A | 25-09-2017 | NONE | | |
| KR 20120121697 | A | 06-11-2012 | NONE | | |

EPO FORM P0459

For more details about this annex : see Official Journal of the European Patent Office, No. 12/82